## Europäisches Patentamt

## European Patent Office

## Office européen des brevets

(19)

(11) Veröffentlichungsnummer: **0 053 252**
**B1**

(12) **EUROPÄISCHE PATENTSCHRIFT**

(45) Veröffentlichungstag der Patentschrift:
**13.11.85**

(51) Int. Cl.⁴: **H 02 B 1/04**

(21) Anmeldenummer: **81108258.5**

(22) Anmeldetag: **13.10.81**

(54) Adapter für elektrische Installationsgeräte.

(30) Priorität: **02.12.80 DE 3045358**

(43) Veröffentlichungstag der Anmeldung:
**09.06.82 Patentblatt 82/23**

(45) Bekanntmachung des Hinweises auf die Patenterteilung:
**13.11.85 Patentblatt 85/46**

(84) Benannte Vertragsstaaten:
**AT BE CH FR GB IT LI NL**

(56) Entgegenhaltungen:
**DE - A - 2 646 123**
**FR - A - 2 438 359**
**US - A - 3 590 332**

(73) Patentinhaber: **BROWN, BOVERI & CIE Aktiengesellschaft, Kallstadter Strasse 1, D-6800 Mannheim 31 (DE)**

(72) Erfinder: **Leible, Erwin, Breslauer Strasse 15, D-6930 Eberbach (DE)**

(74) Vertreter: **Kempe, Wolfgang, Dr. et al, c/o BROWN, BOVERI & CIE AG Kallstadter Strasse 1 Postfach 351, D-6800 Mannheim 31 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

BUNDESDRUCKEREI BERLIN

**Beschreibung**

Die Erfindung betrifft einen Adapter für Installationsgeräte, insbesondere Leitungsschutzschalter, Fehlerstromschutzschalter und dergleichen, mittels dessen wenigstens ein Installationsgerät in Stromverteilungen oder Zählerplätzen an den Sammelschienen befestigbar ist.

Bei Stromverteilungen in Häusern finden zunehmend Zählerplätze gemäß DIN 43 870 Anwendung. Hiernach ist ein Zählerplatzfeld in einen unteren Anschlußraum für die zugangsseitigen Versorgungsleitungen, in ein Zählerfeld mit einem oder mehreren Stromzählern und in einen oberen Anschlußraum mit den verbraucherseitigen Sicherungsautomaten unterteilt.

Im unteren Anschlußraum liegen die Sammelschienen in einer Ebene. Elektrische Installationsgeräte, die vor allem der Stromunterbrechung bei Arbeiten an der Hausinstallation und bei Zählerwechsel sowie dem Schutz vor Überlast- und Fehlerströmen dienen, werden auf Adaptern über dieser Sammelschienenebene montiert. Im unteren Anschlußraum befinden sich darüber hinaus häufig, bedingt durch unterschiedliche Vorschriften der verschiedenen Energieversorgungsunternehmen, weitere unterschiedliche Installationsgeräte.

Es ist üblich, die Sammelschienen mit handelsüblichen Einzelklemmen an die Zuleitungen anzuschließen. Da der zur Verfügung stehende Raum durch die Normung begrenzt ist, ist es jedoch oft schwierig, alle diese Installationsgeräte, Befestigungselemente der Sammelschienen, Adapter und Klemmen im unteren Anschlußraum unterzubringen. Dies gilt insbesondere in den Fällen, wo mehrere Zähler in einem Zählerplatzfeld untergebracht werden sollen, wodurch eine erhöhte Anzahl von Installationsgeräten in dem unteren Anschlußraum untergebracht werden muß. Für die Einspeisung auf die Sammelschienen verbleibt dabei kein Raum, so daß ein zusätzliches Einspeisefeld vorgesehen werden muß. Dies erfordert jedoch eine größere und damit oft verteuerte Verteilungsanlage.

Ein Adapter der eingangs genannten Art ist aus der DE-A-2 646 123 bekanntgeworden. In der Tragplatte sind mehrere Kontaktschienen eingebettet, die quer zu den Sammelschienen verlaufen und an einem Ende mit den Intallationsgeräten und am anderen Ende mit den Sammelschienen verbunden sind. Die Kontaktschienen führen also den Strom von den Sammelschienen bis hin zur Anschlußklemme der einzelnen zugehörigen Installationsgeräte. Weitere Anschlußmöglichkeiten sind nicht vorhanden. Es sind also eigene Klemmen für den Anschluß der Sammelschienen an die Einspeiseleitungen erforderlich. Demgemäß ist auch hier ein zusätzliches Einspeisefeld erforderlich, wodurch die Verteilung oft größer und teurer wird.

Aufgabe der Erfindung ist es, die gesonderten Anschlußklemmen zur Stromeinspeisung entbehrlich zu machen und so ein zusätzliches Einspeisefeld zu vermeiden.

Diese Aufgabe wird erfindungsgemäß dadurch gelöst, daß die Kontaktschienen und die Anschlußteile derart ausgebildet und dimensioniert sind, daß an diese auch die Einspeiseleitungen der Sammelschienen anschließbar sind.

Als Trägereinrichtung kann eine Platte vorgesehen sein, in die die Kontaktschienen eingebettet sind, oder die Trägereinrichtung besteht aus auf den Sammelschienen befestigbaren Isolier-Distanzstücken.

Eine weitere Ausgestaltung der Erfindung kann dahingehen, daß zum Anschluß des Installationsgerätes an die Kontaktschiene eine an eine Schiene angeformte Kontaktfahne dient. Es besteht auch die Möglichkeit, an den als Klemme ausgebildeten Anschlußteilen eine Kontaktfahne anzuformen oder an diesen zu befestigen.

Eine weitere Ausgestaltung der Erfindung kann dahingehen, daß zum Anschluß des Installationsgerätes an die zugehörige Kontaktschiene ein die als Klemme ausgebildeten Anschlußteile und die Anschlußklemme des Installationsgerätes verbindenden Leitungsstück dient.

Anhand der Zeichnung, in der zwei Ausführungsbeispiele der Erfindung gezeigt sind, sollen die Erfindung sowie weitere vorteilhafte Ausgestaltungen und Weiterbildungen näher erläutert werden.

Es zeigt

Fig. 1 einen erfindungsgemäßen Adapter mit in einer Platte eingebetteten Kontaktschienen, mittels dessen ein Installationsgerät über Sammelschienen montiert ist, und

Fig. 2 einen erfindungsgemäßen Adapter mit freiliegenden Kontaktschienen, der ebenfalls ein Installationsgerät über Sammelschienen trägt.

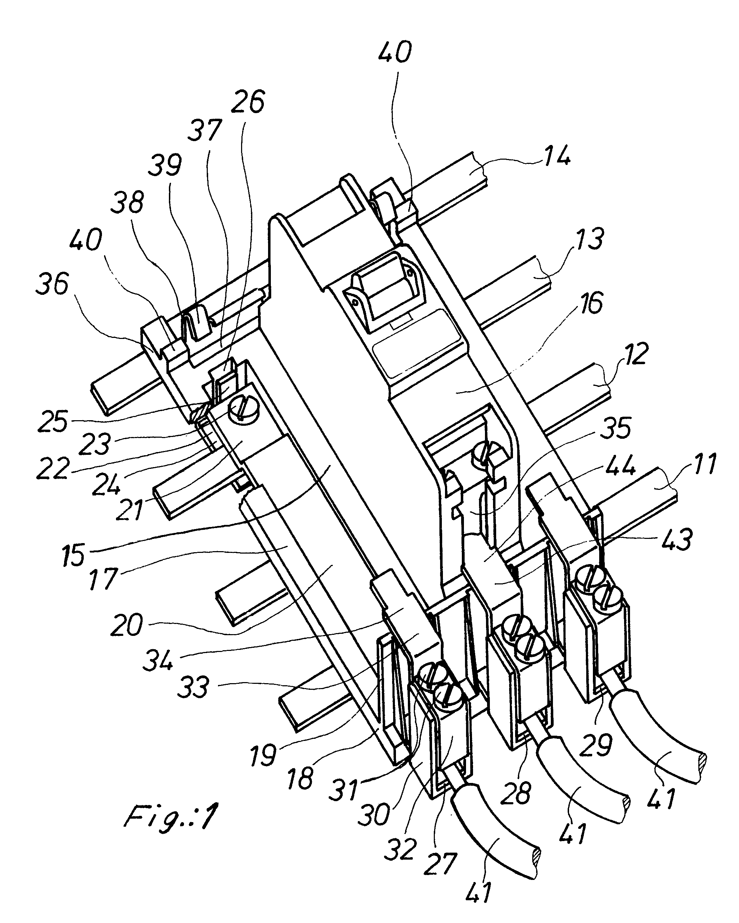

Gemäß Fig. 1 sind in einer nicht weiter dargestellten Stromverteilung Sammelschienen 11, 12, 13 für drei Phasen sowie eine Nulleiterschiene 14 parallel nebeneinander und in einer Ebene liegend angeordnet. Auf den Sammelschienen 11, 12, 13, 14 ist ein Adapter 15 befestigt, der seinerseits ein Installationsgerät 16 trägt.

Der Adapter 15 besteht im wesentlichen aus einer flachen, auf den Sammelschienen 11, 12, 13, 14 aufliegenden Platte 17 aus Isolierstoff, die in ihrem einen Endbereich 18 eine senkrecht abgewinkelte Wand 19 aufweist.

In die Platte 17 sind drei unterschiedlich lange, quer zu den Sammelschienen 11, 12, 13, 14 verlaufende Kontakschienen 20, von denen nur eine sichtbar ist, eingebettet, die lediglich zur Installationsgeräteseite der Platte 17 freiliegen, zur Sammelschienenseite hin jedoch durch Isoliermaterial der Platte 17 abgedeckt sind.

Die sichtbare Kontaktschiene 20 weist in ihrem einen Endbereich eine Abkröpfung 21 auf, die durch einen aus der Platte 17 herausgebrochen dargestellten Bereich sichtbar wird. Die der Sammelschiene 13 zugewandte Fläche der Abkröpfung 21 schließt einerseits eben mit der auf den Sammelschienen 11, 12, 13, 14 aufliegenden Fläche der Platte 17 ab. Sie wird andererseits mit der dritten Sammelschiene 13 mittels Pratze 22 und Zylinderkopfschraube 23 verschraubt, wodurch sich der notwendige Kontaktdruck ergibt. Die Pratze 22 ist winkelförmig ausgebildet. Ihr einer Schenkel 24 weist eine nicht sichtbare Gewindebohrung zur Aufnahme der Zylinderkopfschraube 23 auf und hintergreift die Sammelschiene 13. Der andere Schenkel 25 ist schmaler als der erste Schenkel 24 ausgebildet, ergreift durch eine in der Platte 17 befindliche Ausnehmung 26 und liegt an der Stirnseite der Kontaktschiene 20 an, wodurch sich ein Verdrehschutz für die Pratze 22 ergibt.

Der nicht abgekröpfte Endbereich 27 der Kontaktschiene 20 ragt in dem Endbereich der Platte 17, an dem die abgewinkelte Wand 19 angeformt ist, aus der Platte 17 heraus. Er trägt eine Kastenklemme 30, welche zwei Schrauben 31 und einen Drahtschutz 32 aufweist. An der Kastenklemme 30 ist eine Kontaktfahne 33 angeformt, welche derart abgewinkelt ist, daß ihr freier Schenkel 34 parallel zur Kontaktschiene 20 verläuft und über die Wand 19 auf die der Kastenklemme 30 abgewandten Seite der Platte 17 ragt. Der freie Schenkel 34 ist in seinem Endbereich verjüngt ausgebildet.

Die beiden nicht sichtbaren Kontaktschienen sind in gleicher Weise ausgebildet wie die sichtbare Kontaktschiene 20. Sie sind parallel zu der sichtbaren Kontakschiene 20 angeordnet und ragen ebenfalls mit ihrem jeweils einen Endbereich 28, 29 aus der Platte 17 heraus. Diese Endbereiche 28, 29 tragen in gleicher Weise wie der Endbereich 27 der sichtbaren Kontaktschiene 20 Kastenklemmen mit angeformten Kontaktfahnen. Der freie Schenkel 44 der mittleren Kontaktfahne 43 ragt in die zugangsseitige Anschlußklemme 35 des Installationsgerätes 16.

Die in die Platte 17 eingebetteten Teile der nicht sichtbaren Konakschienen weisen wie die sichtbare Kontakschiene 20 Abkröpfungen auf, die mittels Pratzen und Schrauben auf die Sammelschienen 11, 12 gepreßt werden. Die zur sichtbaren Kontakschiene 20 benachbarte Kontakschiene ist auf diese Weise mit der zweiten Sammelschiene 12 verbunden, während die hintere Kontakschiene die erste, vordere Sammelschiene 11 kontaktiert.

Zur Halterung von Installationsgeräten 16 sind in dem der Wand 19 abgewandten Endbereich 36 der Platte 17 in einer Ausnehmung 37 Federelemente 38 mit U-förmig abgebogenen, federnden Laschen 39 eingeschnappt. Neben den äußeren Federelementen 38 sind am Rand der Platte 17 quaderförmige Anschläge 40 angeformt. Die Platte 17 gemäß Fig. 1 ist zur Aufnahme von drei nebeneinander montierten Installationsgeräten 16 geeignet, von denen jedoch nur das mittlere dargestellt ist.

Bei der Montage des Installationsgerätes 16 auf dem Adapter 15 wird zunächst der freie Schenkel 34 der Kontaktfahne 33 in die Anschlußklemme 35 des Installationsgerätes 16 eingeführt. Dann wird das Installationsgerät 16 auf die Platte 17 gedrückt, so daß die Lasche 39 des Federelementes 38 über einen nicht sichtbaren Vorsprung im Gehäuse des Installationsgerätes 16 verrastet. Die Wand 19 und die Anschläge 40 besorgen die Lagefixierung des Installationsgerätes 16. Schließlich wird die Anschlußklemme 35 angezogen, so daß das Installationsgerät 16 von der Lasche 39 des Federelementes 38 und von dem Schenkel 34 der Kontakfahne 33 gehalten wird.

Die Befestigung des Adapters 15 auf den Sammelschienen 11, 12, 13 erfolgt in dem Ausführungsbeispiel gemäß Fig. 1 lediglich über die bereits beschriebene Befestigung der drei abgekröpften, in die Platte 17 eingebetteten Kontaktschienen 20 auf jeweils einer Stromsammelschiene 11, 12, 13 mittels Pratzen 22 und Zylinderkopfschrauben 23.

Ein Adapter 15 gemäß Fig. 1 ermöglicht einerseits eine direkte Einspeisung auf die Sammelschienen 11, 12, 13 über in den Kastenklemmen 30 eingespannte Speiseleitungen 41. Andererseits können auf diesem Adapter 15 befestigte Installationsgeräte 16 zugangsseitig direkt mittels der Kontaktfahnen 33 elektrisch angeschlossen werden.

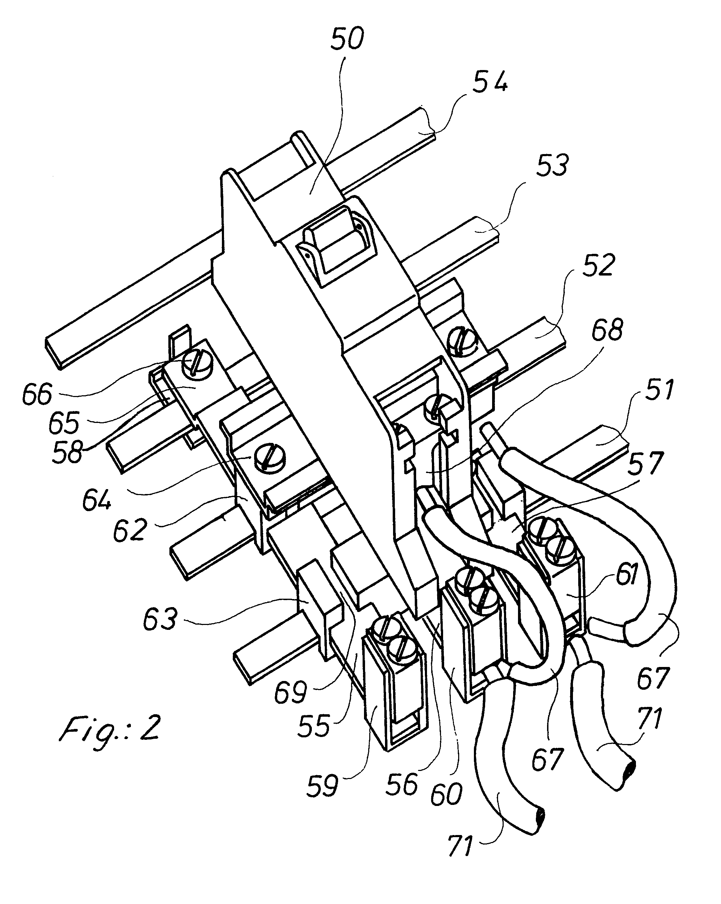

Die Fig. 2 zeigt einen auf Sammelschienen 51, 52, 53 befestigten Adapter, der ein Installationsgerät 50 trägt. Der Adapter besteht aus drei quer zu den Sammelschienen 51, 52, 53 sowie der Nulleiterschiene 54 verlaufenden, im wesentlichen freiliegenden Kontaktschienen 55, 56, 57 mit je einer Pratze 58 und einer Kastenklemme 59, 60, 61. Er besteht ferner aus zwei Isolier-Distanzstücken 62, 63 und einer Hutprofilschiene 64.

Die Kontaktschienen 55, 56, 57 sind identisch wie die in Fig. 1 gezeigten Kontaktschienen 20 ausgebildet. Sie sind mit ihren abgekröpften Enden 65 mittels je einer Pratze 58 und einer Schraube 66 mit jeweils einer Sammelschiene 51, 52, 53 elekrisch verbunden. Auf diese Weise ist die vordere Kontaktschiene 55 mit der dritten Sammelschiene 53, die mittlere Kontaktschiene 56 mit der zweiten Sammelschiene 52 und die hintere Kontaktschiene 57 mit der ersten Sammelschiene 51 verbunden. Diese Verbindung dient gleichzeitig der Befestigung des Adapters auf den Sammelschienen 51, 52, 53.

Zur isolierten Abstützung der Kontaktschienen 55, 56, 57 auf den Sammelschienen 51, 52, 53 dienen zwei Isolier-Distanzstücke 62, 63, die auf ihrer Unterseite eine Längsnut aufweisen, in der die jeweilige Sammelschiene 52, 53 liegt, und deren Oberseite T-förmige Quernuten 69 aufweisen, in die die jeweiligen Kontaktschienen 55, 56, 57 hochkant eingeführt und dann verdreht werden, so daß sie schließlich in den Querschenkeln der T-förmigen Nut 69 verrasten und flach über den Sammelschienen 51, 52, 53 liegen.

Auf dem über der mittleren Sammelschiene 52 liegenden Isolier-Distanzstück 62 ist eine längsausgerichtete Hutprofilschiene 64 aufgeschraubt, auf die in üblicher Weise ein Installationsgerät 50 aufgeschnappt ist.

Die Kastenklemmen 59, 60, 61 der Kontaktschienen 55, 56, 57 unterscheiden sich von denen in Fig. 1 dargestellten Kastenklemmen 30 lediglich dadurch, daß sie keine Kontaktfahnen tragen. Der elektrische Anschluß des Installationsgerätes 50 erfolgt gemäß Fig. 2 durch ein flexibles Leitungsstück 67, dessen eines Ende in der Kastenklemme 60 der Kontaktschiene 56 und deren anderes Ende in der Anschlußklemme 68 des Installationsgerätes 50 befestigt ist. Die Einspeisung auf die Sammelschienen 51, 52, 53 erfolgt über Speiseleitungen 71, die in den Kastenklemmen 59, 60, 61 befestigt werden.

Neben dem in Fig. 2 dargestellten Installationsgerät 50 lassen sich rechts und links je ein weiteres Installationsgerät auf den Adapter montieren.

## Patentansprüche

1. Adapter für elektrische Installationsgeräte (16; 50), insbesondere Leitungsschutzschalter, Fehlerstromschutzschalter und dergleichen, mittels dem wenigstens ein Installationsgerät (16, 50) in Stromverteilungen oder Zählerplätzen an den Sammelschienen (11, 12, 13; 51, 52, 53) befestigbar ist; der eine isolierende Trägereinrichtung (17; 62, 63) aufweist, an der entsprechend der Anzahl der Sammelschienen (11, 12, 13; 51, 52, 53) quer zu den Sammelschienen verlaufende Kontakschienen (20; 55, 56, 57) gehaltert sind, deren eines Ende mit den zugehörigen Sammelschienen (11, 12, 13; 51, 52, 53) verbindbar ist und deren anderes Ende ein Anschlußteil (28, 29, 30; 59, 60, 61) trägt, über das das zugehörige Installationsgerät (16, 50) an die Kontaktschienen (20; 55, 56, 57) anschließbar ist, dadurch gekennzeichnet, daß die Kontaktschienen (20; 55, 56, 57) und die Anschlußteile (28, 29, 30; 59, 60, 61) derart ausgebildet und dimensioniert sind, daß an diese auch die Einspeiseleitungen (41, 71) der Sammelschienen (11, 12, 13; 51, 52, 53) anschließbar sind.

2. Adapter nach Anspruch 1, dadurch gekennzeichnet, daß die Trägereinrichtung (17) als Platte ausgebildet ist, in die die Kontaktschienen (20) eingebettet sind.

3. Adapter nach Anspruch 1, dadurch gekennzeichnet, daß die Trägereinrichtung aus auf den Stromsammelschienen (51, 52, 53) befestigbaren Isolier-Distanzstücken (62, 63) besteht.

4. Adapter nach einem der Ansprüche 1 bis 3, dadurch gekennzeichnet, daß zum Anschluß des Installationsgerätes (16) an die zugehörige Kontaktschiene (11, 12, 13) eine an die Kontaktschiene angeformte Kontaktfahne (33) dient.

5. Adapter nach einem der Ansprüche 1—3, dadurch gekennzeichnet, daß zum Anschluß des Installationsgerätes (16) an die zugehörige Kontaktschiene (11, 12, 13) eine an die als Klemme ausgebildeten Anschlußteile (28, 29, 30) angeformte oder an diesen befestigbare Kontaktfahne (33) dient.

6. Adapter nach einem der Ansprüche 1—3, dadurch gekennzeichnet, daß zum Anschluß des Installationsgerätes (50) an die zugehörige Kontaktschiene (55, 56, 57) ein die als Klemme ausgebildeten Anschlußteile (59, 60, 61) und die Anschlußklemme (68) des Installationsgerätes (50) verbindender Leitungsstücke (67) dient.

## Claims

1. Adapter for electric wiring implements (16; 50), particularly line circuit breakers, fault-current circuit breakers and the like, by means of which adapter at least one wiring implement (16, 50) can be mounted in power distribution systems or meter stations at the bus bars (11, 12, 13; 51, 52, 53); which is provided with an insulating support device (17; 62, 63) on which, corresponding to the number of bus bars (11, 12, 13; 51, 52, 53), contact rails (20; 55, 56, 57) exending transversely to the bus bars are mounted, one end of which contact rails can be connected to the associated bus bars (11, 12, 13; 51, 52, 53) and the other end of which carries a connecting part (28, 29, 30; 59, 60, 61) via which the associated wiring implement (16, 50) can be connected to the contact rails (20; 55, 56, 57), characterised in that the contact rails (20; 55, 56, 57) and the connecting parts (28, 29, 30; 59, 60, 61) are constructed and dimensioned in such a manner that they can also be connected to the feed lines (41, 71) of the bus bars (11, 12, 13; 51, 52, 53).

2. Adapter according to Claim 1, characterised in that the support device (17) is constructed as a plate in which the contact rails (20) are embedded.

3. Adapter according to Claim 1, characterised in that the support device consists of insulating spacers (62, 63) which can be mounted on the current bus bars (51, 52, 53).

4. Adapter according to one of Claims 1 to 3, characterised in that a contact tab (33), moulded as one piece with the contact rail, is used for connecting the wiring implement (16) to the associated contact rail (11, 12, 13).

5. Adapter according to one of Claims 1—3, characterised in that a contact tab (33), which is moulded as one piece with the connecting parts (28, 29, 30) constructed as terminal or can be mounted on these, is used for connecting the wiring implement (16) to the associated contact rail (11, 12, 13).

6. Adapter according to one of Claims 1—3, characterised in that a line section (67), which connects the connecting parts (59, 60, 61) constructed as terminal and the connecting terminal (68) of the wiring implement (50), is used for connecting the wiring implement (50) to the associated contact rail (55, 56, 57).

## Revendications

1. Adaptateur pour des appareils d'installations électriques (16; 50), en particulier des interrupteurs de protection de ligne, de courants de fuite et autres appareils semblables, au moyen duquel un appareil d'installation (16; 50) au moins peut être ancré à des barres collectrices (11, 12, 13; 51, 52, 53) dans des distributions ou des emplacements de compteurs; qui comporte un support isolant (17; 62, 63) auquel, correspondant au nombre des barres collectrices (11, 12, 13; 51, 52, 53) et passant transversalement à celles-ci, sont fixées des barres de contact (20; 55, 56, 57), dont une extrémité peut être reliée aux barres collectrices correspondantes (11, 12, 13; 51, 52, 53) et dont l'autre extrémité porte une pièce de connexion (28, 29, 30; 59, 60, 61) par laquelle l'appareil d'installation (16; 50) peut être connecté aux barres de contact (20; 55, 56, 57), caractérisé en ce que les barres de contact (20; 55, 56, 57) et les pièces de connexion (28, 29, 30; 59, 60, 61) sont agencées et dimensionnées de telle sorte que les circuits d'alimentation (41; 71) des barres collectrices (11, 12, 13; 51, 52, 53) puissent leur être connectés.

2. Adaptateur selon la revendication 1, caractérisé en ce que le support (17) forme une plaque dans laquelle sont encastrées les barres de contact.

3. Adaptateur selon la revendication 1, caractérisé en ce que le support consiste en des entretoises isolantes (62, 63) pouvant être fixées sur les barres collectrices (51, 52, 53).

4. Adaptateur selon l'une des revendications 1 à 3, caractérisé en ce qu'on se sert d'une queue de contact (33) rapportée sur la barre de contact pour le branchement de l'appareil d'installation (16) à la barre de contact correspondante (11, 12, 13).

5. Adaptateur selon l'une des revendications 1 à 3, caractérisé en ce que, pour le branchement de l'appareil d'installation (16) à la barre de contact correspondante (11, 12, 13), on se sert d'une queue de contact (33) rapportée sur les pièces de connexion (28, 29, 30) faisant office de bornes, ou pouvant être fixée à celles-ci.

6. Adaptateur selon l'une des revendications 1 à 3, caractérisé en ce que, pour le branchement de l'appareil d'installation (50) à la barre de contact correspondante (55, 56, 57), on se sert d'une pièce conductrice reliant les pièces de connexion (59, 60, 61), faisant office de bornes, et la borne de jonction (68) de l'appareil (50).

Fig.:1

Fig.: 2